# EUROPÄISCHE PATENTSCHRIFT

(11) **EP 3 438 414 B1**
(45) Veröffentlichungstag und Bekanntmachung des Hinweises auf die Patenterteilung: **09.11.2022**
(21) Anmeldenummer: 18178405.9
(22) Anmeldetag: 19.06.2018
(51) Int. Cl.: F01D 5/28

(54) **SCHAUFEL FÜR STRÖMUNGSMASCHINE MIT VERSCHIEDENEN DIFFUSIONSSCHUTZSCHICHTEN UND VERFAHREN ZUR HERSTELLUNG**
BLADE FOR A FLOW MACHINE WITH DIFFERENT DIFFUSION PROTECTION LAYERS AND METHOD FOR PRODUCTION
AUBE POUR TURBOMACHINE DOTÉE DES DIFFÉRENTES COUCHES DE PROTECTION ET PROCÉDÉ DE FABRICATION

(30) Priorität: 04.08.2017 DE 102017213553
(43) Veröffentlichungstag der Anmeldung: 06.02.2019
(73) Patentinhaber: MTU Aero Engines AG, 80995 München (DE)
(72) Erfinder: Stanka, Rudolf, 84431 Rattenkirchen (DE); Dopfer, Manfred, 85716 Unterschleissheim (DE)

(56) Entgegenhaltungen:
- EP-A1- 0 139 396
- EP-A1- 2 695 964
- EP-A2- 2 695 965
- EP-B1- 2 024 607
- US-A1- 2015 197 841

## Beschreibung

### HINTERGRUND DER ERFINDUNG

### GEBIET DER ERFINDUNG

Die vorliegende Erfindung betrifft eine Schaufel für eine Strömungsmaschine, insbesondere für ein Flugtriebwerk, nach dem Oberbegriff des Anspruchs 1.

### STAND DER TECHNIK

In Strömungsmaschinen wie stationären Gasturbinen oder Flugtriebwerken sind Bauteile, wie beispielsweise Leit- oder Laufschaufeln, sowohl hohen Temperaturen als auch aggressiven Medien bzw. Atmosphären ausgesetzt, die unterschiedliche Schädigungen wie Partikelerosion, Korrosion und Hochtemperaturoxidation bewirken. Entsprechend ist es erforderlich, die Bauteile möglichst gegen alle diese Schädigungen zu schützen, wobei unter Umständen Kompromisse eingegangen werden müssen, da Schutzmaßnahmen, die für eine Art der Schädigung erfolgversprechend sind, selbst einer starken Schädigung durch andere Schädigungsmechanismen ausgesetzt sein können.

Beispielsweise ist es bisher nicht in zufriedenstellendem Maße gelungen, Schutzmaßnahmen gegen verschiedene Korrosions- und Oxidationsangriffe gleichzeitig zu bewirken. So treten bei Gasturbinen oder Flugtriebwerken bei Bauteilen, die Betriebstemperaturen im Bereich von 550 bis 750 °C ausgesetzt sind, unter alkalischen oder erdalkalischen Ablagerungen Korrosions- und Sulfidationsangriffe der sogenannten Typ-2-Korrosion auf. Ein flächiger Materialangriff bei Temperaturen zwischen 750 °C und 900°C unter Anwesenheit von schwefel- und chloridhaltigen Kalium-, Natrium- und Kalziumsalzen wird als Typ-1-Korrosion bezeichnet. Bei Temperaturen über 900 °C dominiert bei Nickelbasisguss- und Kobaltbasisguss-Legierungen, die häufig für Bauteile in entsprechend heißen Bereichen einer Gasturbine oder eines Flugtriebwerks eingesetzt werden, der Oxidationsangriff.

Da es bisher nicht gelungen ist, eine einheitliche Schutzmaßnahme für die verschiedenen Schädigungsmechanismen bereitzustellen, ist bereits vorgeschlagen worden, unterschiedliche Schutzmaßnahmen in unterschiedlichen Bereichen des entsprechenden Bauteils, wie beispielsweise einer Turbinenschaufel, vorzusehen. In der europäischen Patentanmeldung EP 2 695 964 A1 ist beschrieben, dass im Fuß - und / oder Deckbandbereich der Schaufel eine erste Oberflächenschicht mit einer ersten Zusammensetzung und im Blattbereich der Schaufel eine zweite Oberflächenschicht mit einer zweiten von der ersten Zusammensetzung unterschiedlichen Zusammensetzung und im Übergangsbereich Fuß / Blatt und / oder Blatt / Deckband eine dritte Oberflächenschicht mit einer dritten von der ersten und zweiten Zusammensetzung unterschiedlichen Zusammensetzung angeordnet wird, um den unterschiedlichen Schädigungen entgegen zu wirken. Allerdings besteht weiterhin Bedarf einer Verbesserung zur Verringerung der Oxidation und / oder Korrosion.

### OFFENBARUNG DER ERFINDUNG

### AUFGABE DER ERFINDUNG

Es ist deshalb Aufgabe der vorliegenden Erfindung verbesserte Schaufeln für Strömungsmaschinen, insbesondere Flugtriebwerke, bereitzustellen, die den verschiedenen Korrosion - und Oxidationsangriffen besser widerstehen können. Gleichzeitig sollen derartige Schaufeln zuverlässig und mit langer Lebensdauer einsetzbar sowie einfach herstellbar sein.

### TECHNISCHE LÖSUNG

Diese Aufgabe wird gelöst durch eine Schaufel für eine Strömungsmaschine mit den Merkmalen des Anspruchs 1 Vorteilhafte Ausgestaltungen sind Gegenstand der abhängigen Ansprüche.

Die Erfindung schlägt vor, zum Schutz vor Oxidation und Korrosion an einer Schaufel für eine Strömungsmaschine im Bereich des Schaufelblatts zwei Bereiche mit unterschiedlichen AlCr - Diffusionsschutzschichten vorzusehen, wobei sich der erste Bereich über 80 bis 95 % der Länge des Schaufelblatts und der zweite Bereich sich über den Rest der Länge des Schaufelblatts erstreckt und wobei in einem der Bereiche die AlCr - Diffusionsschutzschicht einen höheren Chrom - Gehalt aufweist. Mit einer derartig asymmetrischen Beschichtung des Schaufelblatts einer Schaufel einer Strömungsmaschine lässt sich in besonders guter Weise eine angepasste Schutzbeschichtung für Korrosion, insbesondere Sulfidation, sowie Oxidation einstellen.

Die Schaufel weist an einem Ende des Schaufelblatts ein Deckband auf, welches die gleiche Diffusionsschutzschicht aufweist wie der angrenzende erste Bereich des Schaufelblatts. Zusätzlich können der Schaufelfuß zur Anordnung einer Laufschaufel in eine Scheibe der Strömungsmaschine sowie eine Schaufelplattform, die zwischen Schaufelfuß und Schaufelblatt zur Überdeckung des Schaufelfußes angeordnet sein kann, genauso wie ein Schaufelhals, der zwischen Schaufelfuß und Schaufelblatt ausgebildet sein kann, ebenfalls mit Diffusionsschutzschichten versehen werden.

Die Diffusionsschutzschicht an der Schaufelplattform kann wiederum als eine AlCr - Diffusionsschutzschicht mit einem Chrom - Anteil ausgebildet werden, der höher ist als in den AlCr - Diffusionsschutzschichten des ersten und zweiten Bereichs des Schaufelblatts, während im Bereich des Schaufelfußes und des Schaufelhalses Cr - Diffusionsschutzschichten aufgebracht sein können, also ohne Aluminium.

Die Schaufel kann so ausgebildet sein, dass der erste Bereich des Schaufelblatts sich über 90 % der Länge des Schaufelblatts erstreckt und benachbart zum Deckband angeordnet ist, während der zweite Bereich des Schaufelblatts in Richtung des Schaufelfußes angeordnet ist. Im zweiten Bereich des Schaufelblatts ist eine AlCr - Diffusionsschutzschicht mit einem höheren Chrom - Anteil als im ersten Bereich des Schaufelblatts vorgesehen.

Die AlCr - Diffusionsschutzschicht mit niedrigem Cr - Anteil, die im ersten Bereich am Schaufelblatt und am Deckband angeordnet ist, weist einen Aluminium - Anteil von 16 bis 28 Gew.% und einen Chrom - Anteil von mindestens 5 Gew.% auf. Das Verhältnis von Chrom zu Aluminium ist in dieser AlCr - Diffusionsschutzschicht mit niedrigem Chrom - Anteil im Bereich von kleiner oder gleich 2, insbesondere im Bereich von kleiner oder gleich 1,5 liegen.

Im zweiten Bereich des Schaufelblatts kann eine AlCr - Diffusionsschutzschicht mit einem höheren Cr - Anteil vorgesehen werden, welche einen Aluminium - Anteil von 12 bis 28 Gew.% und einen Cr - Anteil von 24 bis 85 Gew.% aufweist. Das Verhältnis von Chrom zu Aluminium kann bei dieser AlCr - Diffusionsschutzschicht im Bereich von größer oder gleich 1,3 bis kleiner oder gleich 4,4 und insbesondere im Bereich von größer oder gleich 2 bis kleiner oder gleich 3,6 liegen.

Eine dritte AlCr - Diffusionsschutzschicht mit einem noch höheren Cr - Anteil kann an der Schaufelplattform vorhergesehen werden und einen Aluminium - Anteil von mindestens 5 Gew.% und einen Chrom - Anteil von 35 bis 85 Gew.% aufweisen. Das Verhältnis von Chrom zu Aluminium kann bei dieser Diffusionsschutzschicht im Bereich von größer oder gleich 3, insbesondere im Bereich von größer oder gleich 3,6 liegen.

Die Diffusionsschutzschichten weisen neben Chrom in den Cr - Diffusionsschutzschichten sowie Chrom und Aluminium in den AlCr - Diffusionsschutzschichten Bestandteile der Basislegierung auf. Zudem können weitere Elemente, die für die Diffusionsschichten mit vorgesehen werden sollen, in den Ausgangsmaterialien für die Diffusionsschutzschicht angeordnet sein und entsprechend in den Diffusionsschutzschichten eingelagert sein.

Die Diffusionsschutzschichten können eine Dicke im Bereich von 0,015 bis 0,1 mm aufweisen, wobei die AlCr - Diffusionsschutzschicht insbesondere eine Dicke im Bereich von 0,04 bis 0,1 mm aufweisen können. Die Cr - Diffusionsschutzschicht, die am Schaufelfuß vorgesehen sein kann, kann insbesondere eine Dicke im Bereich von 0,015 bis 0,03 mm aufweisen.

Die Diffusionsschutzschichten können an einem Schaufel - Halbzeug, das die entsprechende Endkontur der Schaufel bereits aufweist, durch Chromieren und/oder Alitieren erzeugt werden.

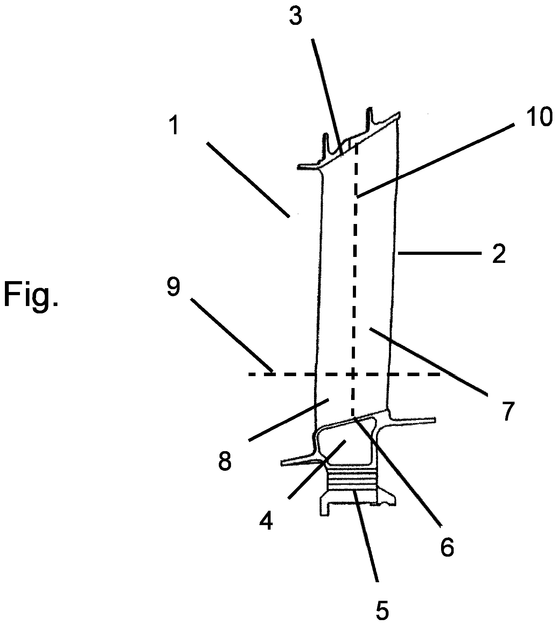

### KURZBESCHREIBUNG DER FIGUR

Die beigefügte Zeichnung zeigt in rein schematischer Weise in der einzigen Figur eine Seitenansicht einer Laufschaufel eines Flugtriebwerks gemäß der vorliegenden Erfindung.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels ersichtlich. Allerdings ist die Erfindung nicht auf dieses Ausführungsbeispiel beschränkt.

In der beigefügten Figur ist eine Laufschaufel 1 eines Flugtriebwerks gezeigt, die ein Schaufelblatt 2 und einen Schaufelfuß 5 aufweist. An dem dem Schaufelfuß 5 gegenüber liegenden Ende des Schaufelblatts 2 ist ein Deckband 3 angeordnet. Zwischen Schaufelblatt 2 und Schaufelfuß 5 ist ein Schaufelhals 4 ausgebildet, an dem eine Schaufelplattform 6 angeordnet ist, die seitlich von der Schaufel 1 hervorsteht.

Die Schaufelblattlängsachse 10, die in der Figur gestrichelt dargestellt ist, erstreckt sich entlang der größten Dimension der Schaufel 1 bzw. bezogen auf die Strömungsmaschine und die Drehachse, um die die Schaufel 1 gedreht wird, in radialer Richtung. Entlang der Längsachse 10 kann die Länge des Schaufelblatts 2 bestimmt werden, die sich in dem gezeigten Ausführungsbeispiel der beigefügten Figur von der Schaufelplattform 6 bis zum Deckband 3 erstreckt. Sofern die Schaufelplattform 6 und das Deckband 3 nicht parallel zueinander verlaufen, kann die Länge des Schaufelblatts 2 dadurch bestimmt werden, dass die Länge der zentralen Längsachse zwischen Schaufelplattform 6 und Deckband 3 verwendet wird.

Quer zur Längsachse 10 ist in der beigefügten Figur eine weitere Linie quer zur Längsachse gestrichelt dargestellt. Diese weitere Linie stellt eine Trennlinie 9 zwischen einem ersten Bereich 7 und einem zweiten Bereich 8 des Schaufelblatts 2 dar, in denen unterschiedliche Diffusionsschutzschichten zum Schutz des Schaufelblatts vor Korrosion und Oxidation ausgebildet sind.

Bei der gezeigten Schaufel 1 ist nämlich durch Chromieren und Alitieren in einem ersten Oberflächenbereich, der den ersten Bereich 7 des Schaufelblatts 2 und das Deckband 3 umfasst, eine erste Diffusionsschutzschicht gebildet, die einen hohen Aluminium - Anteil und einen niedrigen Chrom - Anteil aufweist. In dem zweiten Bereich des Schaufelblatts 2 ist eine weitere AlCr - Diffusionsschutzschicht ausgebildet, die jedoch einen höheren Chrom - Anteil in der Diffusionsschutzschicht aufweist als die erste Diffusionsschutzschicht im ersten Bereich 7 des Schaufelblatts 2.

Auf den Ober - und Unterseiten der Schaufelplattform 6 ist eine weitere AlCr - Diffusionsschutzschicht angeordnet, die einen noch höheren Chrom - Anteil aufweist. Im Bereich des Schaufelhalses 4 und des Schaufelfußes 5 sind keine AlCr - Diffusionsschutzschichten mehr vorgesehen, sondern lediglich Cr - Diffusionsschutzschichten. Die Cr - Diffusionsschutzschicht im Bereich der Schaufelhalses 4 weist einen hohen Chrom - Anteil auf, während die Cr - Diffusionsschutzschicht im Bereich des Schaufelfußes 5 sehr dünn ausgebildet ist. Die Diffusionsschutzschicht im Bereich des Schaufelfußes 5 kann beispielsweise eine Dicke im Bereich von 0,015 bis 0,030 mm aufweisen, während die übrigen Diffusionsschutzschichten, also insbesondere die AlCr - Diffusionsschutzschichten den übrigen Bereichen der Schaufel 1 Schichtdicken im Bereich von 0,04 bis 0,1 mm besitzt.

Der Aluminium - und Chrom - Anteil an der Zusammensetzung der Diffusionsschutzschicht im ersten Bereich 7 des Schaufelblatts 2 kann für Nickelbasislegierungen, wie PWA 1484, PWA 1480, Inconel 100, Inconel 713 und LEK94, die den Basiswerkstoff der Schaufel bilden, im Bereich von 16 bis 28 Gew.% Aluminium sowie mindestens 5 Gew.% Chrom betragen, wobei das Verhältnis Chrom zu Aluminium einen Wert von kleiner gleich 2,2 aufweisen kann. Die Diffusionsschutzschicht mit mittlerem Chrom - Gehalt, die im zweiten Bereich 8 des Schaufelblatts 2 angeordnet ist, kann einen Aluminium - Gehalt von 12 bis 28 Gew.% sowie einen Chrom - Gehalt von 24 bis 85 Gew.% und ein Chrom - Aluminium - Verhältnis von größer oder gleich 2 sowie kleiner oder gleich 4,4 aufweisen, während die Diffusionsschutzschicht mit hohem Chrom - Anteil im Bereich der Schaufelplattform 6 einen Aluminium - Anteil von mindestens 5 Gew.% sowie einen Chrom - Anteil von 35 bis 85 Gew.% und ein Chrom / Aluminium - Verhältnis von größer oder gleich 3 besitzen kann. Wird jedoch beispielsweise eine MAR - M247 oder MAR - M247LCDS - Legierung als Basiswerkstoff für die Schaufel 1 verwendet, so kann das Chrom / Aluminium - Verhältnis für die AlCr - Diffusionsschutzschicht mit niedrigem Chrom - Anteil im ersten Bereich 7 des Schaufelblatts sowie am Deckband kleiner oder gleich 1,5 sein, während es für die AlCr - Diffusionsschutzschicht mit mittlerem Chrom - Anteil im zweiten Bereich 8 des Schaufelblatts 2 größer oder gleich 1,3 bzw. kleiner oder gleich 3,6 betragen kann. Für derartige Legierungen kann die AlCr - Diffusionsschutzschicht mit hohem Chrom - Anteil an der Schaufelplattform 6 ein Chrom / Aluminium - Verhältnis von größer oder gleich 3,6 aufweisen.

Die Diffusionsschutzschichten weisen neben Aluminium und Chrom bzw. bei den Cr - Diffusionsschutzschicht neben dem Chrom zusätzlich Elemente des Basiswerkstoffs der Schaufel auf, auf dem die Diffusionsschutzschichten auf - und eingebracht werden. Hierbei handelt es sich üblicherweise um Nickelbasis - oder Kobaltbasislegierungen, sodass entsprechend hohe Anteile an Nickel oder Kobalt in den Diffusionsschutzschichten enthalten sind. Darüber hinaus können jedoch auch andere Legierungsbestandteile des Basiswerkstoffs in den Diffusionsschutzschicht enthalten sein.

Entsprechende Aluminium - und / oder Chrom - Schichten können dadurch hergestellt werden, dass in einem ersten Teilschritt eine Inchromierung der zu schützenden Bauteiloberfläche erfolgt und, falls gewünscht, in einem zweiten Teilschritt eine Alitierung durchgeführt wird. Die Inchromierung und / oder Alitierung kann in verschiedenen lokalen Bereichen der zu schützenden Bauteiloberfläche gleichzeitig, aber derart unterschiedlich durchgeführt werden, dass unterschiedliche Diffusionsschutzschichten in den unterschiedlichen Bereichen entsprechend den unterschiedlichen Schutzanforderungen entstehen.

Die Abscheidung des Chroms im ersten Teilschritt der Inchromierung kann mittels thermochemischer Verfahren, thermophysikalischer Verfahren, physikalischer Verfahren oder elektrochemischer Verfahren erfolgen.

Unter thermochemischen Verfahren werden hierbei Gasdiffusionsabscheidungen verstanden, bei denen Chrom unter Einsatz von Temperatur und chemischer Reaktionen an der Bauteiloberfläche bereitgestellt wird, so dass das Chrom in das Bauteil eindiffundieren und / oder sich auf diesem ablagern kann.

Beim PVD - Verfahren (physical vapor deposition (physikalische Dampfphasenabscheidung)) wird unter Einsatz von Temperatur eine Verdampfung mit entsprechender Abscheidung von Chrom bewirkt. Bei elektrochemischen Verfahren wird unter Anordnung eines elektrischen Potentials eine Abscheidung von Chrom aus einem Elektrolyten bewirkt. Die Abscheidung von Chrom kann auch mittels Dispersionsbeschichtung erfolgen. Eine Kombination beider letztgenannten Verfahren ist auch denkbar. Dabei kann eine Auflageschicht mittels chemischer und / oder elektrochemischer Abscheidung von Chrom und weiteren Bestandteilen, wie beispielsweise Nickel, und zusätzlich eingelagerten Partikeln hergestellt werden.

Das Eindiffundieren von Chrom in die Bauteiloberfläche zur Ausbildung einer chromreichen Schicht nach der Aufbringung auf die zu schützende Bauteiloberfläche kann durch eine entsprechende Wärmebehandlung erfolgen, wobei auch bei thermochemischen und thermophysikalischen Verfahren, bei denen die Aufbringung bereits bei entsprechenden hohen Temperaturen durchgeführt wird und von daher bereits ein Eindiffundieren des Chroms in der Bauteiloberfläche ermöglicht wird, zusätzlich eine weitergehende Wärmebehandlung zur weiteren Diffusion des Chroms in tiefere Bauteilbereiche durchgeführt werden kann.

In dem ersten Teilschritt der Inchromierung können zur Ausbildung der unterschiedlichen Schutzschichtbereiche in den verschiedenen Bereichen unterschiedliche Chromgehalte abgeschieden werden, indem beispielsweise Chrom enthaltende Materialien in unterschiedlichen Mengen oder mit unterschiedlichen Konzentrationen an Chrom aufgebracht werden.

Bei der Inchromierung können auch unterschiedlichen Dicken der mit Chrom angereicherten Schichten erzeugt werden.

Für die Ausbildung einer ersten, äußeren Oberflächenschicht mit hohem Chromanteil kann die Inchromierung mit einer hohen Chromaktivität durchgeführt werden. Dies kann beispielsweise durch Pulverpackverfahren oder Gasphaseninchromierung realisiert werden.

Die Chromierung kann insbesondere durch eine Temperaturbehandlung in Anwesenheit von flüssigen, chromreichen Schlickerschichten erfolgen, wobei der Schlicker Chrom - haltige Pulver mit Aktivatoren und Bindemittel umfassen kann. Als Bindemittel kommen Alkohole oder sonstige Lösungsmittel in Betracht, während als Aktivator Halogenide eingesetzt werden können. Der Schlicker kann über physikalische Verfahren, wie Streichen oder Spritzen aufgebracht werden.

Bei Verwendung von chromhaltigem Schlicker mit Chromaktivitäten (chemischer Aktivität) von mehr als 0,4 bzw. 40% für hochchromhaltige Teilbereiche der zu erzeugenden AlCr - Schicht kann bei einer thermischen und / oder thermochemischen Behandlung in einem Temperaturbereich von 1000°C bis 1180°C, insbesondere 1050°C bis 1100 °C für Zeiten von 2 bis 20 Stunden, insbesondere 10 bis 15 Stunden, eine chromreiche Schicht ausgebildet werden. Die Chromreiche Schicht weist hierbei eine äußere α - Chrom - Teilschicht und eine innere Mischkristallschicht mit im Wesentlichen Chrom und der Hauptkomponente der Legierung des beschichteten Bauteils, z.B. Nickel auf.

Allgemein lässt sich die Chromierung im ersten Teilschritt bei einer Temperatur von 1000°C bis 1180°C, insbesondere 1050°C bis 1130°C bei einem Zeitraum von 1 bis 20 Stunden, insbesondere 10 bis 15 Stunden durchführen.

Nach der Herstellung der chromreichen Schicht mit vorzugsweise unterschiedlichen Chromgehalten und / oder unterschiedlichen Schichtdicken in den verschiedenen Bereichen der, die unterschiedliche AlCr - Schichten erhalten sollen, wird der so behandelte Grundwerkstoff einem Alitierverfahren unterzogen, bei dem die Schaufel beispielsweise in eine Pulverpackung mit hoher Aluminiumaktivität (chemische Aktivität) im Bereich größer oder gleich 0,15 bzw. 15 % eingepackt und bei Temperaturen von mehr als 1050°C für eine Zeit von 2 bis 14 Stunden thermisch oder thermochemisch behandelt wird. Auch Gasphasenalitieren kann verwendet werden. Hierbei können der Schaufelhals 4 und der Schaufelfuß 5 ohne Alitieren verbleiben, wenn diese Bereiche entsprechend abgedeckt werden. Vorzugsweise kann die Aluminiumaktivität im Bereich von 0,15 bis 0,35 liegen. Als Pulverpackungen kommen Gemische aus Aluminiumoxidpulver, Aluminiumpulver und einem Halogenid als Aktivator, in Frage, sodass Aluminium in die Schicht eindiffundieren kann. Auch bei der Alitierung können durch lokal unterschiedlich verwendete Aluminiumaktivitäten, lokal unterschiedliche Schutzschichten erzeugt werden. Hierbei kann entweder nur die Alitierung bei gleichmäßig erzeugten Cr - reichen Schichten örtlich unterschiedlich erfolgen oder mit der oben beschriebenen örtlich unterschiedlichen Chromierung kombiniert werden.

Zusätzlich kann nach dem Chromieren und Alitieren eine Diffusionsglühung bei einer Temperatur größer oder gleich 1050°C für eine Zeit von 2 bis 8 Stunden durchgeführt werden. Die hier beschriebene Alitierung und / oder Chromierung eignet sich auch für die Innenbeschichtung von Hohlschaufeln.

Vor, während oder nach dem Chromieren und / oder Alitieren kann eine Oberflächenbehandlung durch physikalische Dampfphasenabscheidung (Physical Vapor Deposition (PVD)) chemische Dampfphasenabscheidung (Chemical Vapor Deposition (CVD)), Lackieren, galvanisches Abscheiden und / oder direktes Aufbringen eines Stoffes durchgeführt werden, bei welchem eines oder mehrere Elemente aus der Gruppe, die Platin, Palladium, Hafnium, Zirkon, Yttrium und Silizium umfasst, aufgebracht werden. Damit können in die Schicht eine oder mehrere dieser Elemente eingebracht werden, um so die Schichteigenschaften zusätzlich positiv zu beeinflussen.

Bei dem Ausführungsbeispiel ist eine Beschichtung des gesamten Bauteils, also der Laufschaufel, mit einer erfindungsgemäßen Schichten aus Aluminium und / oder Chrom beschrieben worden. Selbstverständlich ist jedoch die Kombination einer erfindungsgemäßen Schutzschicht mit Aluminium - Chrom - Schichten auch in Kombination mit anderen bekannten Schutzschichten möglich.

Bei der erfindungsgemäßen Aluminium - Chrom - Schutzschicht bedeutet der Begriff der Beschichtung, wie bereits oben erläutert, nicht nur eine Auflage des abgeschiedenen Aluminiums und Chroms auf der ursprünglichen Bauteiloberfläche, sondern die Schutzschicht kann sich auch von der ursprünglichen Bauteiloberfläche aus nach innen in das Werkstoffinnere erstrecken.

Zudem ist bei der Beschreibung der Erfindung lediglich auf die Ausbildung einer äußeren Oberflächenschicht eingegangen worden, welche jedoch lediglich eine Teilschicht des erzeugten Schutzschichtsystems sein kann, sodass in einer Richtung quer zur Bauteiloberfläche in Richtung des Werkstoffinneren weitere, in ihrer Zusammensetzung und Struktur unterschiedliche Teilschichten ausgebildet sein können.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen von Merkmalen verwirklicht werden können, ohne dass der Schutzbereich der beigefügten Ansprüche verlassen wird. Insbesondere schließt die vorliegende Offenbarung sämtliche Kombinationen der in den verschiedenen Ausführungsbeispielen gezeigten Einzelmerkmale mit ein, sodass einzelne Merkmale, die nur in Zusammenhang mit einem Ausführungsbeispiel beschrieben sind, auch bei anderen Ausführungsbeispielen oder nicht explizit dargestellten Kombinationen von Einzelmerkmalen eingesetzt werden können.

### BEZUGSZEICHENLISTE

- 1: Schaufel
- 2: Schaufelblatt
- 3: Deckband
- 4: Schaufelhals
- 5: Schaufelfuß
- 6: Schaufelplattform
- 7: erster Bereich des Schaufelblatts
- 8: zweiter Bereich des Schaufelblatts
- 9: Trennlinie
- 10: Längsachse

## Patentansprüche

1. Schaufel für eine Strömungsmaschine, insbesondere ein Flugtriebwerk, mit einem Schaufelblatt (2) zur Wechselwirkung mit dem Strömungsmedium, wobei die Schaufel (1) in verschiedenen Bereichen an ihrer Oberfläche unterschiedliche Diffusionsschutzschichten zum Schutz gegen Korrosion und / oder Oxidation aufweist, wobei die Diffusionsschutzschichten durch Chromieren und / oder Alitieren hergestellt sind,
**dadurch gekennzeichnet, dass**
das Schaufelblatt entlang der Schaufelblattlängsachse (10) in zwei Bereiche unterteilt ist, wobei der erste Bereich (7) sich über 80 bis 95 % der Länge des Schaufelblatts erstreckt und der zweite Bereich (8) sich über den Rest der Länge des Schaufelblatts erstreckt und wobei in beiden Bereichen (7,8) eine AlCr - Diffusionsschutzschicht aufgebracht ist, wobei die Schaufel (1) an einem Ende des Schaufelblatts ein Deckband (3) aufweist, welches die gleiche Diffusionsschutzschicht wie der angrenzende erste Bereich des Schaufelblatts besitzt, wobei die AlCr - Diffusionsschutzschicht im zweiten Bereich (8) des Schaufelblatts (2) einen höheren Cr - Anteil als im ersten Bereich (7) des Schaufelblattes aufweist, wobei im ersten Bereich (7) und am Deckband eine AlCr - Diffusionsschutzschicht mit niedrigem Cr - Anteil angeordnet ist, die einen Al - Anteil von 16 bis 28 Gew.% und einen Cr - Anteil von mindestens 5 Gew.% aufweist und bei der das Verhältnis von Chrom zu Aluminium im Bereich von kleiner oder gleich 2 liegt.

2. Schaufel nach Anspruch 1,
**dadurch gekennzeichnet, dass**
die Schaufel einen Schaufelfuß (5) zur Anordnung in einer Scheibe der Strömungsmaschine, eine Schaufelplattform (6) zwischen Schaufelfuß und Schaufelblatt zur Überdeckung des Schaufelfußes und einem Schaufelhals (4) zwischen Schaufelfuß und Schaufelblatt aufweist, in dessen Bereich die Schaufelplattform angeordnet ist, wobei an der Schaufelplattform eine AlCr - Diffusionsschutzschicht mit einem Cr - Anteil ausgebildet ist, der höher ist als in den AlCr - Diffusionsschutzschichten des ersten und zweiten Bereichs (7,8) des Schaufelblatts, während im Bereich des Schaufelfußes (5) und des Schaufelhalses (4) Cr - Diffusionsschutzschichten aufgebracht sind.

3. Schaufel nach einem der Ansprüche 1 oder 2,
**dadurch gekennzeichnet, dass**
die Schaufel eine Laufschaufel ist und das Deckband (3) an der Schaufelspitze am vom Schaufelfuß (5) abgewandten Ende des Schaufelblatts angeordnet ist.

4. Schaufel nach einem der Ansprüche 1 bis 3,
**dadurch gekennzeichnet, dass**
sich der erste Bereich (7) über 90 % der Länge des Schaufelblatts erstreckt.

5. Schaufel nach einem der vorhergehenden Ansprüche,
**dadurch gekennzeichnet, dass**
bei der AlCr - Diffusionsschutzschicht mit niedrigem Cr - Anteil, die im ersten Bereich und am Deckband angeordnet ist, das Verhältnis von Chrom zu Aluminium im Bereich von kleiner oder gleich 1,5 liegt.

6. Schaufel nach einem der vorhergehenden Ansprüche,
**dadurch gekennzeichnet, dass**
im zweiten Bereich (8) am Schaufelblatt eine AlCr - Diffusionsschutzschicht angeordnet ist, die einen Al - Anteil von 12 bis 28 Gew.% und einen Cr - Anteil von 24 bis 85 Gew.% aufweist, wobei das Verhältnis von Chrom zu Aluminium im Bereich von größer oder gleich 1,3 bis kleiner oder gleich 4,4 liegt, insbesondere im Bereich von größer oder gleich 2 bis kleiner oder gleich 3,6.

7. Schaufel nach einem der Ansprüche 2 bis 5,
**dadurch gekennzeichnet, dass**
an der Schaufelplattform (6) eine AlCr - Diffusionsschutzschicht angeordnet ist, die einen Al - Anteil von größer oder gleich 5 Gew.% und einen Cr - Anteil von 35 bis 85 Gew.% aufweist, wobei das Verhältnis von Chrom zu Aluminium im Bereich von größer oder gleich 3, insbesondere im Bereich von größer oder gleich 3,6 liegt.

8. Schaufel nach einem der vorhergehenden Ansprüche,
**dadurch gekennzeichnet, dass**
die Diffusionsschutzschichten als Rest neben Cr und / oder Al Bestandteile der Basislegierung aufweisen.

9. Schaufel nach einem der vorhergehenden Ansprüche,
**dadurch gekennzeichnet, dass**
die Diffusionsschutzschichten eine Dicke im Bereich von 0,015 bis 0,1 mm aufweisen, wobei insbesondere die AlCr - Diffusionsschutzschichten eine Dicke im Bereich von 0,04 bis 0,1 mm aufweisen.

10. Schaufel nach einem der Ansprüche 2 bis 9,
**dadurch gekennzeichnet, dass**
die Cr - Diffusionsschutzschicht am Schaufelfuß (5) eine Dicke im Bereich von 0,015 bis 0,03 mm aufweist.

## Claims

1. Blade for a turbomachine, in particular an aircraft engine, comprising an airfoil (2) for interaction with the flow medium, the blade (1) having different diffusion protection layers in different regions on the surface thereof to protect against corrosion and/or oxidation, the diffusion protection layers being produced by chroming and/or alitizing, **characterized in that**
the airfoil is divided into two regions along the airfoil longitudinal axis (10), the first region (7) extending over 80 to 95% of the length of the airfoil and the second region (8) extending over the remainder of the length of the airfoil, and an AlCr diffusion protection layer being applied in the two regions (7, 8), the blade (1) having a shroud (3) at one end of the airfoil, which shroud has the same diffusion protection layer as the adjoining first region of the airfoil, the AlCr diffusion protection layer in the second region (8) of the airfoil (2) having a higher Cr content than in the first region (7) of the airfoil, an AlCr diffusion protection layer having a low Cr content being arranged in the first region (7) and on the shroud, which layer has an Al content of 16 to 28 wt.% and a Cr content of at least 5 wt.% and in which the ratio of chromium to aluminum is in the range of less than or equal to 2.

2. Blade according to claim 1,
**characterized in that**
the blade has a blade root (5) for arrangement in a disc of the turbomachine, a blade platform (6) between the blade root and the airfoil for covering the blade root, and a blade neck (4) between the blade root and the airfoil, in the region of which the blade platform is arranged, an AlCr diffusion protection layer being formed on the blade platform, which layer has a Cr content that is higher than in the AlCr diffusion protection layers of the first and second region (7, 8) of the airfoil, while Cr diffusion protection layers are applied in the region of the blade root (5) and the blade neck (4).

3. Blade according to either claim 1 or claim 2,
**characterized in that**
the blade is a rotor blade and the shroud (3) is arranged on the blade tip at the end of the airfoil facing away from the blade root (5).

4. Blade according to any of claims 1 to 3,
**characterized in that**
the first region (7) extends over 90% of the length of the airfoil.

5. Blade according to any of the preceding claims,
**characterized in that**
in the AlCr diffusion protection layer having a low Cr content, which layer is arranged in the first region and on the shroud, the ratio of chromium to aluminum is in the range of less than or equal to 1.5.

6. Blade according to any of the preceding claims,
**characterized in that**
an AlCr diffusion protection layer is arranged in the second region (8) on the airfoil, which layer has an Al content of 12 to 28 wt.% and a Cr content of 24 to 85 wt.%, the ratio of chromium to aluminum being in the range of from greater than or equal to 1.3 to less than or equal to 4.4, in particular in the range of from greater than or equal to 2 to less than or equal to 3.6.

7. Blade according to any of claims 2 to 5,
**characterized in that**
an AlCr diffusion protection layer is arranged on the blade platform (6), which layer has an Al content of greater than or equal to 5 wt.% and a Cr content of 35 to 85 wt.%, the ratio of chromium to aluminum being in the range of greater than or equal to 3, in particular in the range of greater than or equal to 3.6.

8. Blade according to any of the preceding claims,
**characterized in that**
the diffusion protection layers have components of the base alloy as a remainder, in addition to Cr and/or Al.

9. Blade according to any of the preceding claims,
**characterized in that**
the diffusion protection layers have a thickness in the range of from 0.015 to 0.1 mm, the AlCr diffusion protection layers in particular having a thickness in the range of from 0.04 to 0.1 mm.

10. Blade according to any of claims 2 to 9,
**characterized in that**
the Cr diffusion protection layer at the blade root (5) has a thickness in the range of from 0.015 to 0.03 mm.

## Revendications

1. Aube pour une turbomachine, en particulier un moteur d'aéronef, comportant une pale d'aube (2) destinée à l'interaction avec le milieu d'écoulement, dans laquelle l'aube (1) comporte, dans différentes zones sur sa surface, différentes couches de protection par diffusion destinées à la protection contre la corrosion et/ou l'oxydation, dans laquelle les couches de protection par diffusion sont fabriquées par chromisation et/ou aluminisation,
**caractérisée en ce que**
la pale d'aube est divisée, le long de l'axe longitudinal de pale d'aube (10), en deux zones, dans laquelle la première zone (7) s'étend sur 80 à 95 % de la longueur de la pale d'aube et la seconde zone (8) s'étend sur le reste de la longueur de la pale d'aube, et dans laquelle une couche de protection par diffusion AlCr est appliquée dans les deux zones (7, 8), dans laquelle l'aube (1) comporte, au niveau d'une extrémité de la pale d'aube, un carénage d'extrémité (3), lequel possède la même couche de protection par diffusion que la première zone adjacente de la pale d'aube, dans laquelle la couche de protection par diffusion AlCr dans la seconde zone (8) de la pale d'aube (2) présente une teneur en Cr supérieure à sa teneur dans la première zone (7) de la pale d'aube, dans laquelle, dans la première zone (7) et sur le carénage d'extrémité, une couche de protection par diffusion AlCr présentant une faible teneur en Cr est disposée, laquelle présente une teneur en Al de 16 à 28 % en poids et une teneur en Cr d'au moins 5 % en poids et dans laquelle couche le rapport du chrome à l'aluminium est inférieur ou égal à 2.

2. Aube selon la revendication 1,
**caractérisée en ce que**
l'aube comporte un pied d'aube (5) destiné à être disposé dans un disque de la turbomachine, une plate-forme d'aube (6), entre le pied d'aube et la pale d'aube, destinée à recouvrir le pied d'aube et un col d'aube (4), entre le pied d'aube et la pale d'aube, dans la zone duquel la plate-forme d'aube est disposée, dans laquelle, sur la plate-forme de pale, une couche de protection par diffusion AlCr est formée, laquelle présente une teneur en Cr, lequel est supérieure à la teneur dans les couches de protection par diffusion AlCr des première et seconde zones (7, 8) de la pale d'aube, des couches de protection par diffusion Cr étant appliquées dans la zone du pied d'aube (5) et du col d'aube (4).

3. Aube selon l'une des revendications 1 ou 2,
**caractérisée en ce que**
l'aube est une aube mobile et le carénage d'extrémité (3) est disposé sur la pointe d'aube au niveau de l'extrémité de la pale d'aube opposée au pied d'aube (5).

4. Aube selon l'une quelconque des revendications 1 à 3,
**caractérisée en ce que**
la première zone (7) s'étend sur 90 % de la longueur de la pale d'aube.

5. Aube selon l'une quelconque des revendications précédentes,
**caractérisée en ce que**
dans la couche de protection par diffusion AlCr présentant une faible teneur en Cr, laquelle est disposée dans la première zone et sur le carénage d'extrémité, le rapport du chrome à l'aluminium est inférieur ou égal à 1,5.

6. Aube selon l'une quelconque des revendications précédentes,
**caractérisée en ce que**
dans la seconde zone (8) sur la pale d'aube, une couche de protection par diffusion AlCr est disposée, laquelle présente une teneur en Al de 12 à 28 % en poids et une teneur en Cr de 24 à 85 % en poids, dans laquelle le rapport du chrome à l'aluminium est situé dans la plage comprise entre supérieur ou égal à 1,3 et inférieur ou égal à 4,4, en particulier dans la plage comprise entre supérieur ou égal à 2 et inférieur ou égal à 3,6.

7. Aube selon l'une quelconque des revendications 2 à 5,
**caractérisée en ce que**
sur la plate-forme d'aube (6), une couche de protection par diffusion AlCr est disposée, laquelle présente une teneur en Al supérieure ou égale à 5 % en poids et une teneur en Cr de 35 à 85 % en poids, dans laquelle le rapport du chrome à l'aluminium est supérieur ou égal à 3, en particulier supérieur ou égal à 3,6.

8. Aube selon l'une quelconque des revendications précédentes,
**caractérisée en ce que**
les couches de protection par diffusion comportent en tant que reste, en plus du Cr et/ou de l'Al, des composants de l'alliage de base.

9. Aube selon l'une quelconque des revendications précédentes,
**caractérisée en ce que**
les couches de protection par diffusion présentent une épaisseur dans la plage comprise entre 0,015 et 0,1 mm, dans laquelle, en particulier les couches de protection par diffusion AlCr présentent une épaisseur dans la plage comprise entre 0,04 et 0,1 mm.

10. Aube selon l'une quelconque des revendications 2 à 9,
**caractérisée en ce que**
la couche de protection par diffusion Cr présente, au niveau du pied d'aube (5), une épaisseur dans la plage comprise entre 0,015 et 0,03 mm.
